# EUROPÄISCHE PATENTANMELDUNG

(11) **EP 1 045 173 A2**
(43) Veröffentlichungstag der Anmeldung: **18.10.2000**
(21) Anmeldenummer: 00104290.2
(22) Anmeldetag: 01.03.2000
(51) Int. Cl.: F16H 59/08, F16H 61/02

(54) **Verfahren zur Erstellung oder Änderung eines individuellen Fahrprogramms für ein Getriebe**

(30) Priorität: 14.04.1999 DE 19916808
(71) Anmelder: Bayerische Motoren Werke Aktiengesellschaft, 80809 München (DE)
(72) Erfinder: Ruckdeschel, Thomas, 80799 München (DE)

(57) **Zusammenfassung**

Die Erfindung betrifft ein Verfahren zur Erstellung oder Änderung eines individuellen Fahrprogramms bei einem Kraftfahrzeug mit einem Getriebe, welches in einem Automatik-Modus und einem manuellen Modus schaltbar ist, wobei im Automatik-Modus zumindest ein vordefiniertes Fahrprogramm einstellbar ist und zumindest ein Fahrprogramm durch den Fahrer veränderbar ist.

Eine individuelle Anpassung des Schaltverhaltens bei einem Fahrzeug kann auf einfache Weise dadurch erreicht werden, daß ein individuelles Schaltprogramm durch Auswertung der manuellen Schaltvorgänge beim Betrieb des Fahrzeugs unter Berücksichtigung von bei den Schaltvorgängen vorliegenden Fahrbetriebszuständen ermittelt oder geändert wird.

## Beschreibung

Die Erfindung betrifft ein Verfahren zur Erstellung oder Änderung eines individuellen Fahrprogramms gemäß dem Oberbegriff des Anspruchs 1.

Bekannt ist der Einsatz von Automatikgetrieben bei Kraftfahrzeugen. Bei den Automatikgetrieben kann es sich um Stufenautomaten oder um Automatikgetriebe mit stufenloser Verstellung handeln. Entsprechend den gespeicherten Fahrprogrammen wird die Übersetzung in den Getrieben je nach Fahrzeugbetriebsbedingungen wie Drosselklappenstellung, Fahrgeschwindigkeit etc. geändert. Standardmäßig stehen bei Fahrzeugen mit Automatikgetrieben oftmals Schaltprogramme mit unterschiedlichen Schaltphilosophien zur Auswahl, beispielsweise Economie und Sport.

Damit werden jedoch nicht alle Kundenanforderungen bezüglich des Schaltverhaltens bei Getrieben abgedeckt.

Damit Fahrzeugbediener auch bei Automatikgetrieben manuelle Schaltvorgänge durchführen können, ist es ferner bekannt, Getriebesteuerungen einzusetzen, die neben einem Automatikgetriebe-Modus mit vorbelegten Schaltprogrammen auch einen manuellen Schaltbetrieb ermöglichen. Üblicherweise sind dafür zwei durch eine Quergasse verbundene, parallel zueinander angeordnete Schaltgassen vorgesehen, wobei in einer Schaltgasse verschiedene Automatikfahrstufen anwählbar sind und in der anderen Schaltgasse eine Gangauswahl durch manuelle Hoch- und Rückschaltungen erfolgen kann. Die manuelle Gangauswahl erfolgt beispielsweise durch Bewegen des Schalthebeis in bzw. entgegengesetzt der Fahrtrichtung, wodurch ein Hoch- bzw. Rückschaltvorgang (oder umgekehrt) initiiert wird.

Darüber hinaus war es bereits in der Vergangenheit erwünscht, daß auf Fahrzeugbediener individuell abgestimmte Automatikschaltprogramme bereitgestellt werden, welche insbesondere vom Fahrer gewünschte Schaltcharakteristiken erfüllen. In diesem Zusammenhang wird auf die DE 40 33 574 A1 und die US 5,031,100 hingewiesen, welche Verfahren und Vorrichtungen u. a. zur Erstellung eines individuellen Schaltprogramms beschreiben. Ein wesentlicher Nachteil bei diesen Vorrichtungen und Verfahren ist jedoch, daß ein Fahrer manuell Veränderungen in der Schaltcharakteristik programmieren muß. Dazu ist es notwendig, daß er zum einen eine gewisse Kenntnis von dem zu betreibenden Kraftfahrzeug sowie von den Vorgängen im Kraftfahrzeug hat. Zum anderen muß er oft längere Zeit nach einem Schaltvorgang angeben, ob ihm dieser zu früh oder zu spät durchgeführt wurde.

Aufgabe der vorliegenden Erfindung ist es, ein Verfahren zur Erstellung oder Änderung eines individuellen Fahrzeugprogramms anzugeben, welches auf einfache Weise automatisch die Fahrcharakteristik eines Fahrers in ein individuelles Schaltprogramm einbringt.

Diese Aufgabe wird durch die im Anspruch 1 genannten Merkmale gelöst.

Demgemäß wird ein individuelles Schaltprogramm durch Auswerten der manuellen Schaltvorgänge beim Betrieb des Fahrzeugs unter Berücksichtigung von bei den Schaltvorgängen vorliegenden Fahrbetriebszuständen ermittelt oder geändert. Dieses individuelle Schaltprogramm kann dann als Automatikfahrprogramm ausgewählt werden.

Hintergrund der vorliegenden Erfindung ist die Überlegung, daß je nach Fahrstil eines Fahrers die Schaltpunkte immer bei bestimmten Fahrbetriebszuständen erfolgen. Bei solchen Fahrbetriebszuständen kann es sich um bestimmte Drosselklappenstellungen, die Fahrgeschwindigkeit, Bremsvorgänge, Beschleunigungsvorgänge, Kurvenfahrten etc. handeln. Berücksichtigt man solche Fahrbetriebszustände bei den Schaltvorgängen und wertet diese aus, so kann man ein genau auf einen bestimmten Fahrer abgestimmtes individuelles Schaltprofil erzeugen und als individuelles Schaltprogramm hinterlegen. Natürlich sollten die hinterlegten individuellen Schaltprogramme auch noch geändert werden können.

Die Erstellung des individuellen Schaltprogramms geschieht vorzugsweise in einem Lernmodus, der durch Betätigen einer Taste eingestellt werden kann. Die Auswahl des individuellen Schaltprogramms als Automatikschaltprogramm kann manuell durch den Fahrzeugbediener erfolgen. Alternativ kann es auch als eines von mehreren Schaltprogrammen in der Automatikschaltgasse ausgewählt werden.

Sollte ein individuelles Schaltprogramm geändert werden, so kann gemäß einer vorteilhaften Ausführungsform eine sogenannte 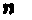 Override-Funktion" vorgesehen werden, mit der man manuell in das individuelle Schaltprogramm eingreifen kann. Beispielsweise kann man dann manuell einen Hochschaltvorgang durchführen, falls dies gewünscht vom individuellen Schaltprogramm aber nicht geleistet ist. Schaltet das individuelle Schaltprogramm dagegen zu früh, so kann die Hoch- oder Rückschaltung durch manuelles Schalten wieder rückgängig gemacht werden. Beim vorliegenden Verfahren werden diese manuellen Schaltvorgänge während der Ausführung des individuellen Schaltprogramms dann ausgewertet und durch eine entsprechende Veränderung des individuellen Schaltprogramm wieder in dieses eingebracht.

Bei einer besonders bevorzugten Ausführungsform der Erfindung geht man bei der ersten Erstellung eines individuellen Schaltprogramms von einem bereits existierenden Schaltprogramm aus, das gemäß den individuellen Schaltbetätigungen des Fahrers beim manuellen Modus verändert wird. Dabei sollen vorzugsweise funktions- und sicherheitsrelevante Programmteile des Ausgangsschaltprogramms beibehalten werden, so daß beispielsweise kein 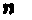 Überdrehen" des Verbrennungsmotors passieren kann.

Bei einer einfachen Ausführungsform der Erfindung wird demgemäß beim Erstbetrieb des Fahrzeugs das individuelle Schaltprogramm mit einem normalen Automatikprogramm vorbelegt. Zur Erstellung oder Veränderung des individuellen Schaltprogramms wird eine im Bereich des Schalthebels angeordnete Taste gedrückt, wodurch in einer Getriebesteuerung ein Lernmodus aktiviert wird. Ist dieser Lernmodus aktiviert, so wird das Schaltverhalten des Fahrers im manuellen Betrieb ausgewertet. Insbesondere werden die dabei vorliegenden Fahrbetriebsbedingungen, nämlich die Drosselklappenstellung, die Fahrgeschwindigkeit und die Fahrdynamik des Fahrzeugs sowie die Lenkvorgänge analysiert und berücksichtigt. Entsprechend dieser Analyse werden nach einem vorgegebenen Programm das AusgangsAutomatikprogramm oder das bereits erlernte individuelle Schaltprogramm bzw. die darin abgelegten Schalt-Kennlinien abgeändert. Der Lernmodus kann durch nochmaliges Betätigen der obengenannten Taste wieder deaktiviert werden. Dann steht dem Fahrer sein durch die Fahrzeugführung generiertes Individualprogramm als zusätzliches Automatikprogramm zur Verfügung, das er zusätzlich zu den bisherigen Programmen mittels einer zusätzlichen Taste auswählen kann.

In einer alternativen Ausführungsform kann das Individualprogramm auch in der Automatikgasse mittels des Gangwahlhebels in einer bestimmten Schaltposition eingestellt werden.

Die funktions- und sicherheitsrelevanten Programmteile wie Zwangsschaltungen, situative Eingriffe (z.B. bei Berg- oder Kurvenerkennung) und Notfunktionen des vormalig Ausgangs-Automatikprogramms können auch beim individuellen Programm erhalten bleiben.

Natürlich kann für jeden Fahrer ein entsprechendes individuelles Schaltprogramm hinterlegt sein, so daß bei einer entsprechenden Car-Key-Memory-Funktion, bei dem jedem Schlüssel bestimmte Eigenschaften zugewiesen werden, das für diesen Fahrer/Schlüssel eingestellte Individualprogramm erlernt oder ausgewählt wird. Zudem läßt sich das Verfahren zur Erstellung des Individualprogramms nicht nur auf Stufenautomaten sondern auch auf stufenlose Automatikgetriebe übertragen.

Insgesamt kann mit der vorliegenden Erfindung jeder Fahrer ein eigenes, individuelles Fahrprogramm erstellen, ohne daß er dieses bewußt programmieren müßte. Zudem ist eine einfache Handhabung gewährleistet.

## Patentansprüche

1. Verfahren zur Erstellung oder Änderung eines individuellen Fahrprogramms bei einem Kraftfahrzeug mit einem Getriebe, welches in einem Automatik-Modus und einem manuellen Modus schaltbar ist, wobei im Automatik-Modus zumindest ein vordefiniertes Fahrprogramm einstellbar ist und zumindest ein Fahrprogramm durch den Fahrer veränderbar ist,
dadurch gekennzeichnet,
daß ein individuelles Schaltprogramm durch Auswertung von manuellen Schaltvorgängen beim Betrieb des Fahrzeugs unter Berücksichtigung von bei den Schaltvorgängen vorliegenden Fahrbetriebszuständen ermittelt oder geändert wird.

2. Verfahren nach Anspruch 1,
dadurch gekennzeichnet,
daß das individuelle Schaltprogramm im manuellen Modus erstellt und als Automatik-Fahrprogramm ausgewählt werden kann.

3. Verfahren nach Anspruch 1 oder 2
dadurch gekennzeichnet,
daß das individuelle Schaltprogram während seiner Ausführung durch manuelles Schalten (Override-Funktion) geändert wird.

4. Verfahren nach einem der vorhergehenden Ansprüche,
dadurch gekennzeichnet,
daß bei der ersten Erstellung des individuellen Schaltprogramms von einem zunächst existierenden Schaltprogramm ausgegangen wird.

5. Verfahren nach einem der vorhergehenden Ansprüche,
dadurch gekennzeichnet,
daß die Erstellung oder Verfeinerung des individuellen Schaltprogramms in einem Lernmodus stattfindet.

6. Verfahren nach Anspruch 5
dadurch gekennzeichnet,
daß der Lernmodus über eine Taste eingestellt wird.

7. Verfahren nach einem der Ansprüche 1 bis 6
dadurch gekennzeichnet,
daß bei der Veränderung eines bestehenden Schaltprogramms sicherheitsrelevante Programmteile erhalten bleiben.
